# EUROPEAN PATENT APPLICATION

(11) **EP 4 400 865 A1**
(43) Date of publication of application: **17.07.2024**
(21) Application number: 23220811.6
(22) Date of filing: 29.12.2023
(51) Int. Cl.: G01S 7/4861, G01S 7/497

(54) **MASTER CONTROL CHIP OF LIDAR AND LIDAR DEVICE**

(30) Priority: 30.12.2022 CN 202211719906; 30.12.2022 CN 202211720352; 30.12.2022 CN 202211719963
(71) Applicant: Suteng Innovation Technology Co., Ltd., Shenzhen Guangdong (CN)
(72) Inventor: LIU, Yuqi, Shenzhen (CN); LIAO, Yumin, Shenzhen (CN)
(74) Representative: RGTH

(57) **Abstract**

The present invention proposes a master control chip of a LiDAR and a LiDAR device. The master control chip of the LiDAR includes an execution control unit, a communication interface, an operation management unit and a function test unit. Main components of the execution control unit, the communication interface, the operation management unit and the function test unit of the LiDAR system are highly integrally designed, so that one chip completes functions such as ranging control, operation management and function detection that originally need to be implemented by one entire great system, thereby reducing design costs and a volume, and improving safety and reliability of the LiDAR system.

## Description

### TECHNICAL FIELD

The present invention pertains to the technical field of LiDAR, and in particular, to a master control chip of a LiDAR and a LiDAR device.

### TECHNICAL BACKGROUND

As one of the most important sensors for autonomous driving, a LiDAR can provide a decision-making system with position, size, or movement information of traffic participants in smart transportation, autonomous driving and other fields, which makes the LiDAR the eyes of the autonomous driving vehicles.

However, an existing LiDAR system is mainly built with discrete devices such as a computing processor, a security MCU control processor, a scanning control system, and a laser control system. As a result, the LiDAR system is large in size, high in cost, and not suitable for large-scale production.

### SUMMARY

The present invention aims to provide a master control chip of a LiDAR, to resolve problems of high costs and a large volume of an existing LiDAR system.

A first aspect of the embodiments of the present invention proposes a master control chip of a LiDAR, including an execution control unit, a communication interface, an operation management unit and a function test unit that are integrated, where
the execution control unit is configured to be connected to a ranging module of the LiDAR device and control the ranging module to perform ranging work;
the operation management unit connects to the execution control unit and the communication interface respectively, and is configured to communicate with a peripheral device through the communication interface and drive the execution control unit to work; and
the function test unit connects to each unit of the master control chip of the LiDAR, performs function state detection, and reports corresponding state information.

Optionally, the ranging module includes a laser transceiving module and a galvanometer module; and
the execution control unit includes:
a point cloud processing unit, configured to process point cloud data of the laser transceiving module;
a laser transceiving control unit, configured to control laser transceiving work of the laser transceiving module; and
a galvanometer control unit, configured to control movement of the galvanometer module.

Optionally, the function test unit includes:
a test unit, connected to each unit of the master control chip of the LiDAR and configured to be controlled to perform function state detection and feed back detection information; and
a security management unit, connected to the test unit and configured to drive the test unit to perform test work, receive the detection information and report corresponding state information.

Optionally, the test unit includes:
a memory test unit, configured to perform function detection on each storage unit of the master control chip of the LiDAR and report corresponding storage detection information to the security management unit; and
a logic circuit test unit, configured to perform function detection on each logic unit of the master control chip of the LiDAR, and report corresponding logic detection information to the security management unit.

Optionally, the test unit further includes:
a clock test unit, configured to detect clock information of the master control chip of the LiDAR and report corresponding clock detection information to the security management unit; and
a power supply test unit, configured to detect a power supply state of the master control chip of the LiDAR, and report corresponding power supply detection information to the security management unit.

Optionally, the master control chip of the LiDAR further includes:
an information security unit, connected to the operation management unit, where information security unit is configured to calculate an algorithm program related to information security of the master control chip of the LiDAR.

Optionally, the master control chip of the LiDAR further includes a data bus; and
the operation management unit connects to the execution control unit and the information security unit separately through the data bus.

Optionally, the master control chip of the LiDAR further includes:
a security decoupling unit, where the security decoupling unit is connected between the operation management unit and the data bus, and is configured to detect and isolate interaction information between the operation management unit and the execution control unit and the information security unit.

Optionally, the master control chip of the LiDAR further includes a data bus; and
the operation management unit connects to the execution control unit and the information security unit separately through the security decoupling unit and the data bus.

Optionally, the communication interface, the operation management unit and the function test unit are arranged in a security domain; and
the execution control unit is arranged in a non-security domain, and the security domain and the non-security domain are respectively connected to different power supply modules and clock modules.

A second aspect of the embodiments of the present invention proposes a LiDAR device, including a ranging module and the foregoing master control chip of the LiDAR, where the master control chip of the LiDAR is correspondingly connected to the ranging module.

Compared to the related art, the embodiments of the present invention have beneficial effects: main components of the LiDAR system, which are the execution control unit, the communication interface, the operation management unit and the function test unit, are highly integrated in the master control chip of the LiDAR. In this way, one chip completes functions of ranging control, operation management and function test that originally need combination of multiple systems to complete, thereby reducing design costs, reducing the size and improving safety and reliability of the LiDAR system.

### BRIEF DESCRIPTION OF THE DRAWINGS

FIG. 1 is a first schematic structural diagram of a master control chip of a LiDAR according to an embodiment of the present invention;
FIG. 2 is a second schematic structural diagram of a master control chip of a LiDAR according to an embodiment of the present invention;
FIG. 3 is a first schematic structural diagram of a laser transceiving control unit in the master control chip of the LiDAR shown in FIG. 2;
FIG. 4 is a schematic waveform diagram of a control signal of the laser transceiving control unit shown in FIG. 3;
FIG. 5 is a second schematic structural diagram of a laser transceiving control unit in the master control chip of the LiDAR shown in FIG. 2;
FIG. 6 is a third schematic structural diagram of a laser transceiving control unit in the master control chip of the LiDAR shown in FIG. 2;
FIG. 7 is a fourth schematic structural diagram of a laser transceiving control unit in the master control chip of the LiDAR shown in FIG. 2;
FIG. 8 is a first schematic structural diagram of a galvanometer control unit in the master control chip of the LiDAR shown in FIG. 2;
FIG. 9 is a second schematic structural diagram of a galvanometer control unit in the master control chip of the LiDAR shown in FIG. 2;
FIG. 10 is a third schematic structural diagram of a galvanometer control unit in the master control chip of the LiDAR shown in FIG. 2;
FIG. 11 is a fourth schematic structural diagram of a galvanometer control unit in the master control chip of the LiDAR shown in FIG. 2;
FIG. 12 is a schematic diagram of a scanning field of view of the galvanometer control unit shown in FIG. 11;
FIG. 13 is a fifth schematic structural diagram of a galvanometer control unit in the master control chip of the LiDAR shown in FIG. 2;
FIG. 14 is a third schematic structural diagram of a master control chip of a LiDAR according to an embodiment of the present invention; and
FIG. 15 is a fourth schematic structural diagram of a master control chip of a LiDAR according to an embodiment of the present invention.

### DETAILED DESCRIPTION OF EMBODIMENTS

To more clearly describe the present invention to be resolved with this solution, technical solutions, and beneficial effects, the following further describes this solution in detail with reference to the accompanying drawings and embodiments. It should be understood that the specific embodiments described herein are only used to explain the present invention, and are not intended to limit the present invention.

In addition, the terms such as "first" and "second" are merely intended for a purpose of description, and shall not be understood as an indication or implication of relative importance or implicit indication of a quantity of indicated technical features. Therefore, a feature with a determiner such as "first" or "second" can expressly or implicitly include one or more features. In the description of the present invention, "a plurality of" means two or more, unless otherwise specifically defined.

A first aspect of the embodiments of the present invention provides a master control chip 100 of a LiDAR to integrate and manage main functional modules of the LiDAR device and implement functions of ranging, function management and testing, and thereby simplifying the structure of the LiDAR device and reducing design costs.

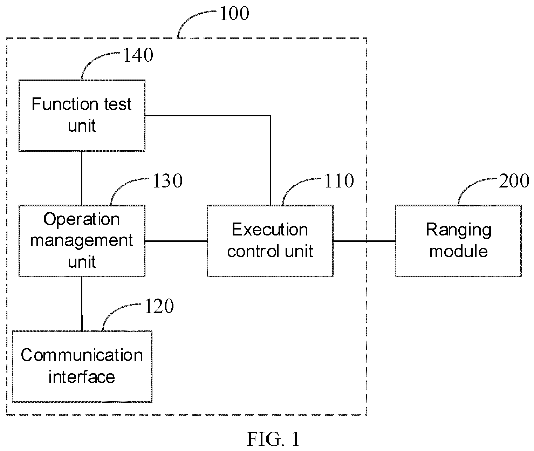

As shown in FIG. 1, in some embodiments, the master control chip 100 of the LiDAR includes an execution control unit 110, a communication interface 120, an operation management unit 130 and a function test unit 140 that are integrated. The execution control unit 110 is configured to connect a ranging module 200 of the LiDAR and control the ranging module 200 to operate ranging. The operation management unit 130 connects to the execution control unit 110 and the communication interface 120 respectively, and is configured to communicate with a peripheral device through the communication interface 120 and drive the execution control unit 110 to operate. The function test unit 140 connects to each unit of the master control chip 100 of the LiDAR, and is configured to test function states of the units of the master control and report corresponding state information.

In some embodiments, the function test unit 140 connects to all units of the master control chip 100 of the LiDAR and collects function test statuses including power supply status, logic status, clock status and the like of each unit when the master control chip 100 of the LiDAR is powered on and/or during subsequent work, to ensure that each unit of the master control chip 100 of the LiDAR starts well and is in a normal working condition. In addition, if the function test unit 140 finds abnormal in one or more units, the function test unit 140 reports the exception to a superior system and the LiDAR pauses starting or suspends work and waits for further instructions from the superior system.

The communication interface 120 connects to a commonly used communication module of a vehicle-mounted device, for example Ethernet and CAN communication module, and transmits communication signal such as data information or a control signal to communicate with the communication module.

The execution control unit 110 connects to the ranging module 200 of the LiDAR device, outputs and receives a corresponding control signal, feedback information and the like, and drives the ranging module 200 to complete ranging, for example, point cloud data processing, galvanometer deflection movement control, and laser transceiving control.

The operation management unit 130 serves as the core of the chip's safe operation and control. On the one hand, the operation management unit 130 drives the operation management unit 130 connects with an external communication module through the communication interface 120 in order to transmit the signal or upload the exception report. On the other hand, the operation management unit 130 drives the execution control unit 110 to complete the ranging.

In some embodiments, main components of the LiDAR system, which are the execution control unit 110, the communication interface 120, the operation management unit 130 and the function test unit 140, are highly integrated in the master control chip of the LiDAR. So that one chip completes functions of ranging control, operation management and function test that originally need a combination of multiple systems to complete, thereby reducing design costs, reducing the size and improving safety and reliability of the LiDAR system.

Based on communication needs and communication module types, one or more corresponding types of communication interfaces 120 can be arranged in the master control chip, for example, an Ethernet port, a PCIe interface, and a CAN interface. Specific types and the number of communication interfaces 120 are not limited herein.

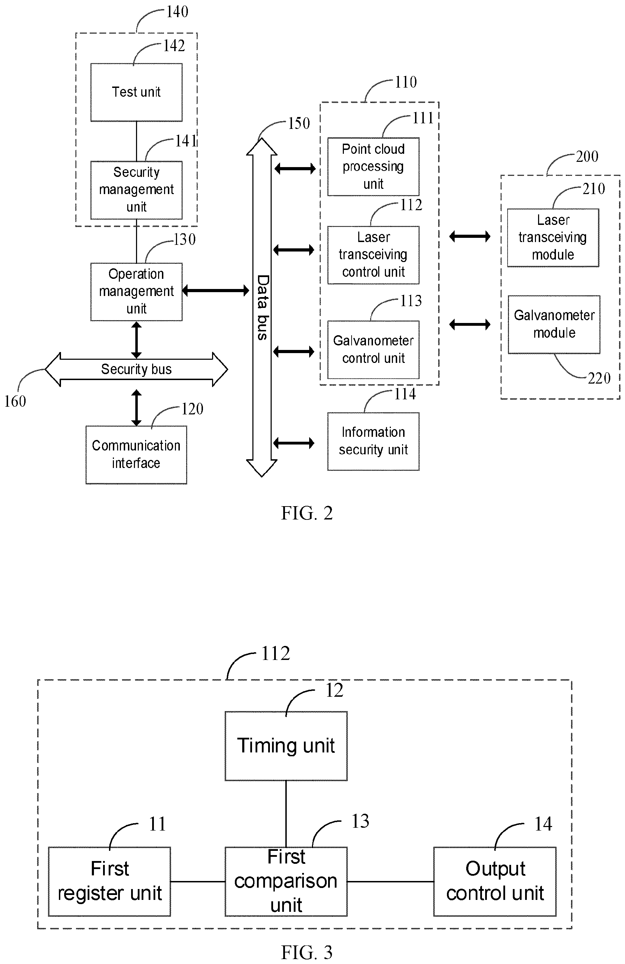

The execution control unit 110 can be correspondingly arranged based on module composition and a ranging principle of the ranging module 200. As shown in FIG. 2, the ranging module 200 includes a laser transceiving module 210 and a galvanometer module 220. The laser transceiving module 210 emits a pulsed outgoing laser beam and then the galvanometer module 220 reflects the pulsed outgoing laser beam to a corresponding field of view. In addition, an echo beam returning after being reflected by a target object in the field of view is directed to the galvanometer module 220, and the galvanometer module 220 reflects the echo beam to the laser transceiving module 210. The laser transceiving module 210 receives the echo beam and converts the received optical signal into an electrical signal. The galvanometer module 220 is driven to move to deflect the optical beams in two directions such as a vertical direction and a horizontal direction, to implement two-dimensional scanning of the field of view.

Optionally, as shown in FIG. 2, corresponding to the structure of the ranging module 200, the execution control unit 110 includes:
a point cloud processing unit 111, configured to process point cloud data output by the laser transceiving module 210;
a laser transceiving control unit 112, configured to control the laser transceiving module 210 to emit and receive; and
a galvanometer control unit 113, configured to control movement of the galvanometer module 220.

The laser transceiving module 210 includes a laser emission module and a laser receiving module. The laser transceiving control unit 112 controls emitting and receiving of the laser transceiving module 210, including driving a laser to emit a pulsed outgoing laser beam, controlling the laser receiving module to receive an echo beam and performing processing such as optics and electrics conversion, amplification and sampling. In addition, the laser transceiving control unit 112 adjusts the emission power and/or the emission frequency of the laser based on the intensity of the echo signal.

The galvanometer control unit 113 controls the deflection movement of the galvanometer module 220, such as the deflection angle and the deflection moving speed, to adjust scanning angles of view, resolution and frame rates.

The laser transceiving module 210 emits a pulsed outgoing laser beam and receives a corresponding echo beam. After calculation of the point cloud processing unit 111, data of a point is obtained. The data includes coordinate information (x, y, z) in space, and can also include reflectivity information, speed information, and the like. A collection of massive points in the field of view is a point cloud. The denser the point cloud, the more details and information of the image the point cloud reflects.

During a scanning process of the LiDAR, due to impact of factors such as the noise interference, high reflectivity of the target object, the system accuracy, and the electromagnetic interference, original point cloud data output by the transceiving module 210 is likely to have problems such as noise point, pseudo image, and dragging point. Therefore, the original point cloud data needs to be further processed. The point cloud processing unit 111 preprocesses the original point cloud data, which can remove the noise points of the point cloud and optimize quality of the output point cloud data.

The point cloud processing unit 111, the laser transceiving control unit 112 and the galvanometer control unit 113 can choose a corresponding structure such as a processor or a controller. A specific structure is not limited.

In some embodiments, as shown in FIG. 3, the laser transceiving control unit 112 includes a first register unit 11, a timing unit 12, a first comparison unit 13 and an output control unit 14.

The first register unit 11 is configured to obtain a control characteristic table of the control signal. Item information of the control characteristic table includes a preset number N of hops of the control signal, hopping moments of N hops and a hopping characteristic corresponding to each hopping moment, where the hopping characteristic is hopping between any two of n levels, N is a positive integer, and n>2 and is an integer.

The laser transceiving control unit 112 generates corresponding control signals based on the control characteristic table, and outputs the control signals to the laser transceiving module 210 to control the laser transceiving module 210 to emit or receive. For example, the control signal drives the laser transceiving module 210 to emit laser pulses in a corresponding sequence.

The item information includes sequence information of the control signal, including the preset hopping times, the hopping moments and a hopping characteristic corresponding to each hopping moment. For example, as shown in Table 1, the total hopping times of the control signal is N in one clock cycle, and the hopping moments include moment 1 to moment N. That is, a voltage characteristic hopping occurs once at each moment. The hopping at each moment has a corresponding hopping characteristic. For example, the hopping from a first electrical level to a second electrical level corresponds to a characteristic 1 at the moment 1, the hopping from the second electrical level to a third electrical level corresponds to a characteristic 2 at the moment 2, the hopping from an N^{th} electrical level to an (N+1)^{th} electrical level corresponds to a characteristic N at the moment N and so on.

**Table 1**

| Item information | Entry description |
|---|---|
| Hopping times | N |
| Hopping moment | Moment 1 |
| Hopping characteristic | Characteristic 1 |
| Hopping moment | Moment 2 |
| Hopping characteristic | Characteristic 2 |
| ... | ... |
| Hopping moment | Moment N |
| Hopping characteristic | Characteristic N |

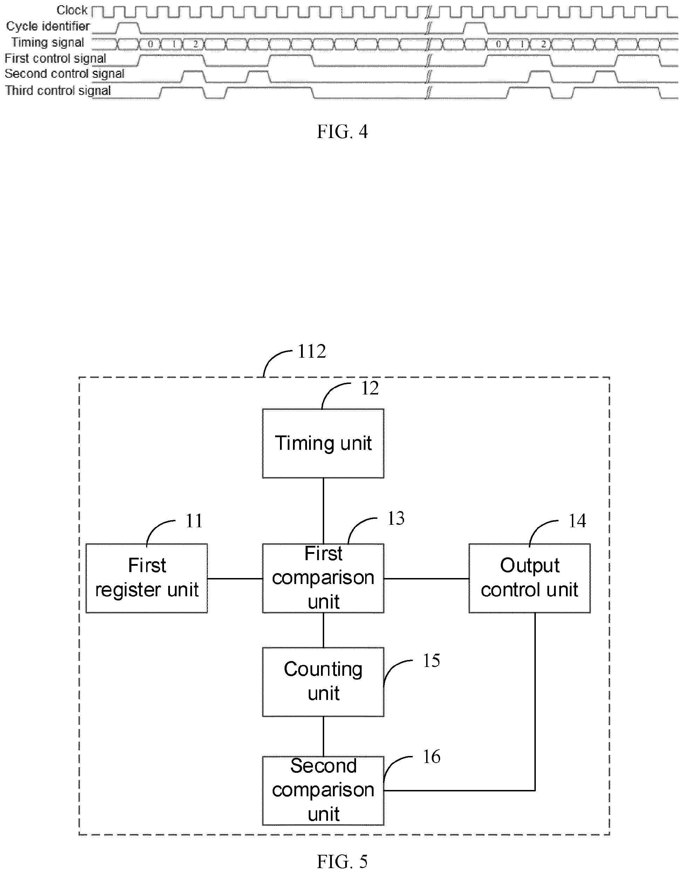

In some embodiments, taking the first control signal driving the laser transceiving module 210 as an example, the total hopping times in one clock cycle is four, and there are two hopping characteristics: hopping from the first electrical level to the second electrical level and hopping from the second electrical level to the first electrical level. As shown in FIG. 4, the first control signal hops from the first electrical level to the second electrical level at a 0^{th} timing moment, the first control signal hops from the second electrical level to the first electrical level at a 3^{rd} timing moment, the first control signal hops from the first electrical level to the second electrical level at a 6^{th} timing moment, and the first control signal hops from the second electrical level to the first electrical level at an 8^{th} timing moment.

The item information of the control characteristic table can be edited. For example, the hopping times of the first control signal can be 6 in one clock cycle, hopping moments are 11, t2, ..., t6, and hopping characteristics are hopping from the first electrical level to the second electrical level at t1, t3 and t5, and hopping from the second electrical level to the first electrical level at t2, t4, t6. As shown in FIG. 2, because a clock signal of the system is also usually cyclically, it is difficult to set any moment within the clock cycle as a hopping moment. The cycle of the clock signal can be timed through a timing signal, and the hopping moment is set as the timing moment of the timing signal. In some embodiments, as shown in FIG. 4, the first control signal hops from the first electrical level to the second electrical level at the 0^{th} timing moment, the first control signal hops from the second electrical level to the first electrical level at the 3^{rd} timing moment, and the timing moment 0^{th} and the timing moment 3^{rd} are hopping moments.

Further, the hopping characteristic is not limited to hop between two level signals, but can hop between n levels. For example, the first control signal hops from the first electrical level to the second electrical level for first hopping, hops from the second electrical level to the third electrical level for second hopping, and hops from the third electrical level to the fourth electrical level for third hopping. The first electrical level, the second electrical level, the third electrical level and the fourth electrical level are different from each other. The control signals with different electrical level values drive the laser transceiving module 210 in different working states. The hopping characteristic can be designed based on hardware characteristics and control requirements of the laser transceiving module 210. Taking a laser emission circuit in the laser transceiving module 210 as an example, the control signals of the laser emission circuit have three voltage states: 0, 1, or 2. When the voltage state is in the state 0, the laser emission circuit does not emit the outgoing laser beam and is in a turn-off state; when the voltage state is in the state 1, the laser emission circuit emits the outgoing laser beam with low power and is in a turn-on state; and when the voltage state is in the state 2, the laser emission circuit emits the outgoing laser beam with high power and is also in the turn-on state. The hopping characteristics of the control signals of the laser emission circuit include hopping from the first electrical level (state 0) to the second electrical level (state 1), hopping from the second electrical level to the first electrical level, hopping from the second electrical level to the third electrical level (state 2), hopping from the third electrical level to the second electrical level, hopping from the first electrical level to the third electrical level and hopping from the third electrical level to the first electrical level.

Optionally, to adapt to the laser transceiving module 210 with digital circuits, digitalized control signals are provided. Herein, n can be set to 2, and the hopping characteristics include the first hopping characteristic and the second hopping characteristic. The first hopping characteristic is hopping from a low electrical level to a high electrical level, and the second hopping characteristic is hopping from the high electrical level to the low electrical level. The low electrical level and the high electrical level can be represented by digital signals of 0 and 1 respectively. That is, the hopping characteristics of the control signals include hopping from 1 to 0 and hopping from 0 to 1.

Similarly, as shown in FIG. 4, there may be multiple control signals such as a first control signal, a second control signal, and a third control signal. There may be one or more groups of item information in the control characteristic table, and each group of item information generates a control signal to drive a module circuit in the laser transceiving module 210. There is no specific limit on the number of groups of item information. For example, the control characteristic table includes two groups of item information; the first group of item information is used to correspondingly generate the emission control signal to drive the laser emission circuit in one laser transceiving module 210 to emit the outgoing laser beams in sequences; and the second group of item information is used to correspondingly generate the receiving control signal used to drive the laser receiving circuit in the same laser transceiving module 210 to receive the echo beams in sequences.

After being edited, the control characteristic table is updated to the first register unit 11, and the control characteristic table is read out from the first register unit 11 and stored into the first comparison unit 13 when the first register unit 11 is in a running state, so that the timing unit 12, the first comparison unit 13 and the output control unit 14 generate the control signal and control the hopping of the control signal based on the control characteristic table.

The timing unit 12 is configured to start timing at a start moment of the clock cycle.

The first comparison unit 13 connects to the first register unit 11 and the timing unit 12 respectively, and is configured to compare the timing result with the N hopping moments in the control characteristic table. When the timing result matches the hopping moment, the first comparison unit 13 outputs the first comparison signal.

The output control unit 14 connects to the first comparison unit 13 and is configured to drive the control signal to hop at the hopping moment via a corresponding hopping characteristic based on the first comparison signal.

When the laser transceiving module 210 is in the running state, the timing unit 12 starts timing at the start moment of each clock cycle. The first comparison unit 13 compares the timing result with the N hopping moments in the control characteristic table respectively and determines whether the current timing result matches the hopping moments in the control characteristic table. If the current timing result matches the hopping moments in the control characteristics, it indicates that the current moment is a certain hopping moment and the control signal should hop according to the hopping characteristic corresponding to the hopping moment; or if the current timing result doesn't match the hopping moments in the control characteristics, it indicates that the control signal doesn't hop at the current moment and maintains the current electrical level. In addition, when the timing result matches one of the hopping moments, the first comparison unit 13 outputs the first comparison signal, for example, a high electrical level or a low electrical level. According to the received first comparison signal, the output control unit 14 drives the control signal to hop at the hopping moment via the corresponding hopping characteristic, and outputs the control signal corresponding to the hopping characteristic at the preset hopping moment to the laser transceiving module 210.

The timing start moment, a moment when the laser transceiving module 210 switches from other state to the running state, is the start moment of the first clock cycle and the timing is started from this moment. After the laser transceiving module 210 switches from the other state to the running state, the first clock cycle can also start after a certain time of initialization.

As shown in FIG. 4, taking the first control signal as an example, the timing unit 12 starts timing at the start moment of the first clock cycle, and the start moment is denoted as the 0^{th} timing moment. In the first clock cycle, the control characteristic table of the first control signal is, the 0^{th} timing moment is the hopping moment 1, and the corresponding hopping characteristic is hopping from 0 to 1; the 3^{rd} timing moment is the hopping moment 2, and the corresponding hopping characteristic is hopping from 1 to 0; the 6^{th} timing moment is the hopping moment 3, and the corresponding hopping characteristic is hopping from 0 to 1; and the 8^{th} timing moment is the hopping moment 4, and the corresponding hopping characteristic is hopping from 1 to 0. An initial electrical level of the first control signal is 0. When the timing result is 0, the timing result matches the hopping moment 1. At this time, the first comparison unit 13 outputs the first comparison signal, and the output control unit 14 drives the control signal to hop from 0 to 1. When the timing results are 1 and 2, the timing results do not match any hopping moment. At this time, the first comparison unit 13 doesn't output the first comparison signal, and the output control unit 14 maintains the electrical level of the control signal at 1. When the timing result is 3, the timing result matches the hopping moment 2. At this time, the first comparison unit 13 outputs the first comparison signal, and the output control unit 14 drives the control signal to hop from 1 to 0. When the timing results are 4 and 5, the timing results do not match any hopping moment. At this time, the first comparison unit 13 doesn't output the first comparison signal, and the output control unit 14 maintains the electrical level of the control signal at 0. When the timing result is 6, the timing result matches the hopping moment 3. At this time, the first comparison unit 13 outputs the first comparison signal, and the output control unit 14 drives the control signal to hop from 0 to 1. When the timing result is 7, the timing result does not match any hopping moment. At this time, the first comparison unit 13 doesn't output the first comparison signal, and the output control unit 14 maintains the electrical level of the control signal at 1. When the timing result is 8, the timing result matches the hopping moment 4. At this time, the first comparison unit 13 outputs the first comparison signal, and the output control unit 14 drives the control signal to hop from 1 to 0. Until the timing result at the end moment of the first clock cycle does not match any hopping moment, the output control unit 14 maintains the electrical level of the control signal at 0 and outputs the first control signal, shown in FIG. 2.

After receiving a cycle stamp of the next clock cycle, the timing unit 12 starts the next clock cycle, resets the timing result to zero and then restarts timing.

Similarly, if there are multiple groups of the item information, the timing unit 12 compares the timing results with the preset hopping moments in each group of item information in the control characteristic table separately, controls the output unit 14 to drive the multiple groups of control signals to hop at corresponding moments via the hopping characteristics of the respective item information, and outputs multiple groups of the same control signals. For example, the first control signal, the second control signal and the third control signal, shown in FIG. 4, respectively correspond to three groups of the item information in the control characteristic table.

The control characteristic table of the first control signal is, the 0^{th} timing moment is the hopping moment 1, and the corresponding hopping characteristic is hopping from 0 to 1; the 3^{rd} timing moment is the hopping moment 2, and the corresponding hopping characteristic is hopping from 1 to 0; the 6^{th} timing moment is the hopping moment 3, and the corresponding hopping characteristic is hopping from 0 to 1; and the 8^{th} timing moment is the hopping moment 4, and the corresponding hopping characteristic is hopping from 1 to 0. The first comparison unit 13 compares the timing result with the preset hopping moments of the first group of the item information and outputs the first comparison signal to the output control unit 14, and the output control unit 14 generates the first control signal, as shown in FIG. 4.

The control characteristic table of the second control signal is, the 2^{nd} timing moment is the hopping moment 1, and the corresponding hopping characteristic is hopping from 0 to 1; the 3^{rd} timing moment is the hopping moment 2, and the corresponding hopping characteristic is hopping from 1 to 0; the 5^{th} timing moment is the hopping moment 3, and the corresponding hopping characteristic is hopping from 0 to 1; and the 6^{th} timing moment is the hopping moment 4, and the corresponding hopping characteristic is hopping from 1 to 0. The first comparison unit 13 compares the timing result with the preset hopping moments of the second group of the item information and outputs the first comparison signal to the output control unit 14, and the output control unit 14 generates the second control signal, as shown in FIG. 4.

The control characteristic table of the third control signal is, the 1^{st} timing moment is the hopping moment 1, and the corresponding hopping characteristic is hopping from 0 to 1; the 3^{rd} timing moment is the hopping moment 2, and the corresponding hopping characteristic is hopping from 1 to 0; the 4^{th} timing moment is the hopping moment 3, and the corresponding hopping characteristic is hopping from 0 to 1; and the 8^{th} timing moment is the hopping moment 4, and the corresponding hopping characteristic is hopping from 1 to 0. The first comparison unit 13 compares the timing result with the preset hopping moments of the third group of the item information and outputs the first comparison signal to the output control unit 14, and the output control unit 14 generates the third control signal, as shown in FIG. 4.

In the three groups of the item information in the foregoing example, the numbers of hopping times of the three control signals are the same. The numbers of hopping times in multiple groups of the item information in the control characteristic table can also be different and can be set according to requirement of the control signal.

The first control signal, the second control signal and the third control signal correspond to the same clock cycle. The first clock cycle of the first control signal, the second control signal and the third control signal start at the same, and the timing start as well. Therefore, the first comparison unit 13 and the output control unit 14 can output three control signals in different sequences in one clock cycle by adjusting the three groups of the item information of the control characteristic table, which improves control efficiency and also facilitates pace consistency of the control signals. For example, the first control signal is configured to drive the laser emission circuit, the second control signal is configured to drive the laser receiving circuit, and the third control signal is configured to drive an echo signal filtering circuit, so as to output multiple control signals associated with the clock signal.

Further, to ensure that the control signal does not additionally hop more than the hopping times in one clock cycle and the control signals are in right sequence, as shown in FIG. 5, the laser transceiving control unit 112 also includes:
a counting unit 15, being connected to the first comparison unit 13 or the output control unit 14 and configured to count the times the control signal hops within the clock cycle; and
a second comparison unit 16 is respectively connected to the counting unit 15, the first register unit 11, and the output control unit 14, and configured to compare a counting result with the preset hopping times in the control characteristic table and output the second comparison signal to the output control unit 14 when the hopping times of the control signal is greater than or equal to the preset hopping times, so as to stop the control signal hopping.

When comparing the timing result of each clock cycle, the counting unit 15 synchronously counts the hopping times of the control signal. The counting unit 15 can count the hopping times according to the number of the first comparison signals output by the first comparison unit 13 or the hopping times of the output control unit 14. The second comparison unit 16 compares the counting result with the preset hopping times in the control characteristic table. When the counting result is not bigger than the preset hopping times, the second comparison unit 16 outputs no signal or a drive signal different from the second comparison signal, and the output control unit 14 drives the control signal to hop according to the number and the moment of the first comparison signals. When the hopping times of the control signal is bigger than the preset hopping times, the second comparison unit 16 outputs the second comparison signal. The output control unit 14 maintains the voltage characteristic of the control signal from the last hoping after receiving the second comparison signal. The hopping times in the clock cycle are accumulated, and when the hopping times exceed the preset hopping times in the control characteristic table, the output control unit 14 stops hopping the control signal to ensure that the control signal does not additionally hop and the control signals are in right sequence.

When starting the running state, the output control unit 14 obtains the updated control characteristic table and outputs control signals according to the control characteristic table. Editing and writing of the control characteristic table can be operated through a programming interface. Editing refers to storing the control characteristic table into the corresponding first storage unit 17 through the programming interface, and writing refers to the pre-obtaining unit 18 writes the control characteristic table into the first register unit 11 from the first storage unit 17. The control states of the first register unit 11 can be an editing state or the running state. Optionally, inputting a state switching signal through a state switching interface to switch the control states of the first register unit 11 between the editing state and the running state.

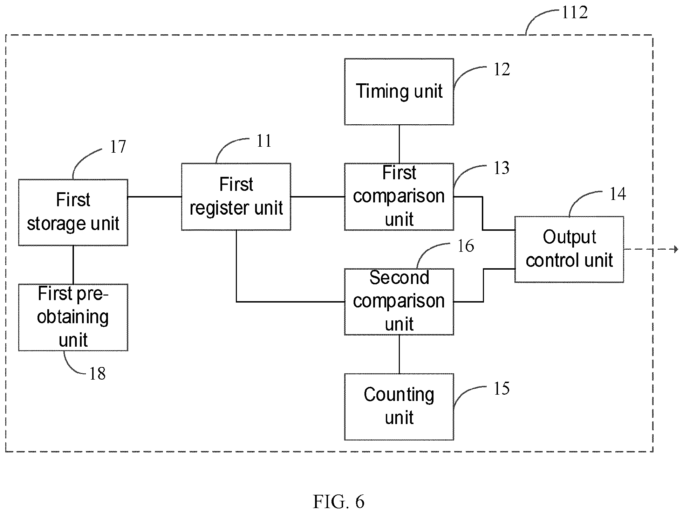

In some embodiments, the state switching between the editing state and the running state can be implemented by inputting the state switching signal through the state switching interface. As shown in FIG. 6, the laser transceiving control unit 112 further includes the first storage unit 17 and the first pre-obtaining unit 18.

The first storage unit 17 is configured to edit and store the control characteristic table when the control state is the editing state; and the first pre-obtaining unit 18 is configured to write the control characteristic table stored in the first storage unit 17 into the first register unit 11 when the working state is switched to the running state.

In the editing state, the output control unit 14 outputs no signal. The edited control characteristic table is edited into the first storage unit 17 through the programming interface, and the hardware triggers inputting the state switching signal through the state switching interface, after the editing is completed, to switch to the running state. When receiving the state switching signal, the first pre-obtaining unit 18 writes the new control characteristic table from the first storage unit 17 into the first register unit 11, providing the control characteristic table for the first comparison unit 13 and the second comparison unit 16 in the running state.

The control characteristic table is updated by switching the control state. When adjusting the sequence of the output control signal, the control characteristic table is edited again and the control state of the first register unit 11 is switched to the editing state. In the editing state, the first pre-obtaining unit 18 writes the updated control characteristic table into the first register unit 11. When the control state is switched to the running state, a new clock cycle is started. From the clock cycle, the first register unit 11 outputs the updated control characteristic table to the output control unit 14, so that the output control unit 14 outputs the control signal sequence adjusted. The control state of the first register unit 11 is not switched to the editing state unless next the sequence adjustment of the control signal is required.

The method for editing the control characteristic table can ensure that logic of the control signal output in each clock cycle is normal, avoid changing the item information in the middle of the clock cycle, and ensure that the control signal output in each clock cycle is intact. The moment when the control state is switched to the running state is the start moment of the clock cycle. That is, after the intact control signal is output in the previous clock cycle, the control state of the first register unit is switched to the editing state, the control characteristic table is updated, and the next clock cycle starts after the control state is switched to the running state. The edited control characteristic table is updated to the first register unit 11 to input the first comparison unit 13 and/or the second comparison unit 16 to compare. The output control unit 14 adjusts the hopping moment, the hopping times and the hopping characteristics of the control signals in the next clock cycle based on a received comparison signal and outputs the control signal sequence adjusted.

In some embodiments, the control characteristic table is edited and written to adjust the sequence of the control signal, it needs to repeatedly switch the control states of the first register unit 11 and the output control unit 14, and the output control unit 14 in the editing state cannot output the control signal, which leads to low efficiency. In some embodiments, there is no need to switch the control state of the first register unit 11, and the laser transceiving control unit 112 is configured with protection logic so that the chip design supports real-time editing and writing.

Optionally, the first register unit 11 is further configured to:
write an edited control characteristic table of the control signal; and
obtain the control characteristic table at the start moment of the clock cycle.

In some embodiments, the first register unit 11 is always in a running state. The edited control characteristic table is stored into the first storage unit 17 through the programming interface, in order to be written into the first register unit 11. At this time, the first comparison unit 13 reads the existing control characteristic table in the first register unit 11, and the output control unit 14 still outputs the control signal according to the control characteristic table in the first register unit 11. When the next clock cycle is started, the updated control characteristic table is written into the first register unit 11 through the first pre-obtaining unit 18 at the start moment, to replace the original control characteristic table. That is, the control characteristic table in the first register unit 11 can be modified in the running state, and the first register unit 11 is automatically refreshed at an appropriate moment to update the control characteristic table to adjust the hopping moments, the hopping times and hopping characteristics of the control signal in the next clock cycle, outputting the control signal sequence adjusted.

The control state update of the first register unit 11 can be triggered by the first storage unit 17 or other internal modules. Optionally, the laser transceiving control unit 112 also includes the first storage unit 17 and the first pre-obtaining unit 18;
the first storage unit 17 is configured to edit and store the control characteristic table; and
the first pre-obtaining unit 18 is configured to write the control characteristic table into the first register unit 11 and send an update instruction to the first register unit 11, so that the first register unit 11 obtains the control characteristic table at the start moment of the following clock cycle according to the update instruction.

In some embodiments, after the edited control characteristic table is stored in the first storage unit 17, the update instruction is sent to the first pre-obtaining unit 18. After receiving the update instruction, the first pre-obtaining unit 18 reads the updated control characteristic table from the first storage unit 17 at the start moment of the next clock cycle and stores the updated control characteristic table in the first register unit 11 to overwrite the original control characteristic table. In the next clock cycle, the output control unit 14 outputs the control signal according to item information of the updated control characteristic table. The sequence of the control signal in the next clock cycle is different from the sequence of the control signal in the previous clock cycle.

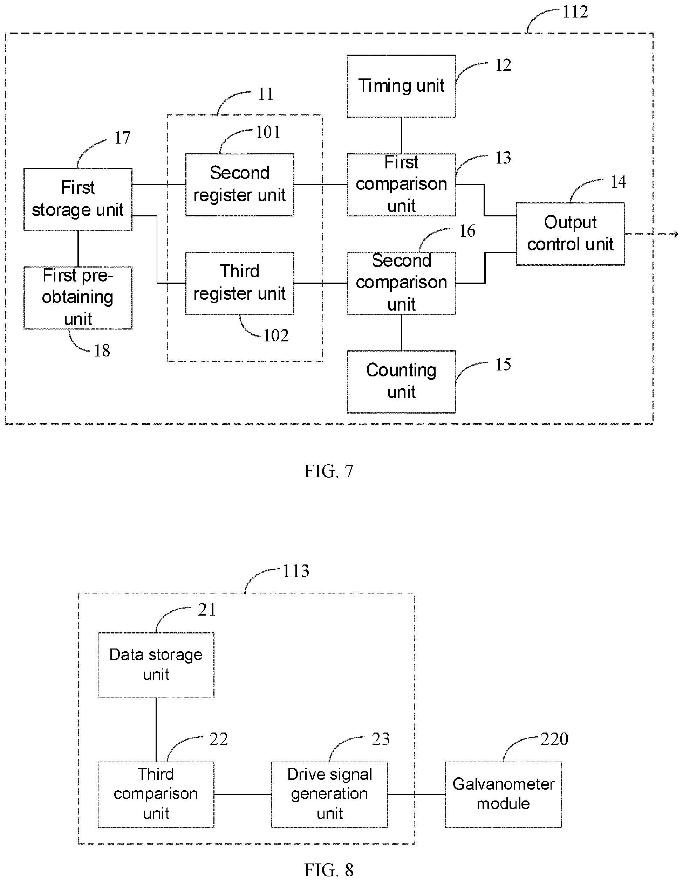

To ensure unity of data and facilitate timing and counting, as shown in FIG. 7, the first register unit 11 includes a second register unit 101 and a third register unit 102;
the second register unit 101 connects to the first storage unit 17 and the first comparison unit 13 respectively, and is configured to load the hopping moments and the hopping characteristics of each hop of the control signal in the control characteristic table; and
the third register unit 102 connects to the first storage unit 17 and the second comparison unit 16 respectively, and is configured to load the preset hopping times of the control signal in the control characteristic table.

In this embodiment, the second register unit 101 and the third register unit 102 load different item information of the control characteristic table. The second register unit 101 is configured to load the hopping moments and hopping characteristics of the item information. The third register unit 102 is configured to load the preset hoping times N of the item information.

In addition, the second register unit 101 outputs the item information of the hopping moments and hopping characteristics to the first comparison unit 13. The first comparison unit 13 compares the timing results and outputs the first comparison signal. The third register unit 102 outputs the preset hopping times to the second comparison unit 16. The second comparison unit 16 compares the counting results and outputs the second comparison signal. The output control unit 14 drives the control signal to hop the preset times within the clock cycle and hop at the hopping moment with the hopping characteristic based on the first comparison signal and second comparison signal.

The first storage unit 17 can be a corresponding memory type such as a flash memory or a RAM memory. The first pre-obtaining unit 18 can be a corresponding reader/writer module, and the first register unit 11 can be a corresponding type of register. The specific types are not limited.

The timing unit 12 and the counting unit 15 can be timers, counters and the like. The first comparison unit 13 and the second comparison unit 16 can be comparators, flip-flops and the like. The output control unit 14 can be a signal source, a signal generating circuit and the like. The specific structures are not limited.

In some embodiments, as shown in FIG. 8, the galvanometer control unit 113 includes a data storage unit 21, a third comparison unit 22 and a drive signal generation unit 23. The third comparison unit 22 connects to the data storage unit 21 and the drive signal generation unit 23.

The data storage unit 21 is configured to obtain the characteristic table. The item information of the characteristic table includes the number N of divided regions, boundary values of the N regions, and slope values of drive signals corresponding to the N regions, where N is a positive integer.

The third comparison unit 22 is configured to obtain a row number of the current scanning row, compare the row number of the current scanning row with the boundary values of the N regions, and determine the slope value of the drive signal corresponding to a j^{th} region as a target slope value when the row number of the current scanning row matches the boundary value of the j^{th} region.

The drive signal generation unit 23 is configured to generate the drive signal with the target slope value and output the drive signal to drive the galvanometer module 220.

The field of view is divided into N consecutive regions in a direction perpendicular to a row. Assuming that a range of the vertical field of view (FOV) is from a 0^{th} scanning row to an m^{th} scanning row, the boundary values of the first region are from the 0^{th} scanning row to the first boundary value, the boundary values of the second region are from the first boundary value to the second boundary value, the boundary values of the third region are the second boundary value to the third boundary value, ..., the boundary values of the N^{th} region are the (N-1)^{th} boundary value to the m^{th} scanning row. Each boundary value corresponds to a particular row number of the scanning rows from the 0^{th} scanning row to the m^{th} scanning row. In addition, scanning rows in the same region correspond to the same slope value of the drive signal. The slope values of the drive signal corresponding to each region are set according to scanning requirement of obtaining point clouds. For example, the slope value for a interest scanning region is less than that for non-interest scanning region, and slope values for other non-interest scanning regions can be equal or unequal. Specific slope values are not limited.

A characteristic table generation unit 26 can change the number of divided regions in the field of view, the location of the regions in the field of view, and the slope values of the drive signal corresponding to each region by editing the item information of the characteristic table. According to the scenarios, the LiDAR can scan different regions in the field of view with different resolutions in the vertical direction, thereby expanding application scenarios of the LiDAR.

During laser ranging, the laser emission assembly emits a laser pulse to the galvanometer module 220. The galvanometer module 220 reflects the laser pulse to scan a target field of view row by row.

During scanning, the data storage unit 21 sends the item information of the characteristic table to the third comparison unit 22, and the third comparison unit 22 obtains row numbers of the current scanning rows that are input successively. The row numbers sequentially vary from a row number of the 0^{th} scanning row to a row number of the m^{th} scanning row, or from the row number of the m^{th} scanning row to the row number of the 0^{th} scanning row. The galvanometer module 220 scans the field of view row by row in the same sequence from top to bottom or from bottom to top. The third comparison unit 22 compares the row number of the current scanning row with the boundary values of the N regions, to determine the row number of the current scanning row falls within the range of the boundary values of which region, so that the target slope value of the drive signal of the current scanning row is determined as the slope value corresponding to the region currently matched.

For example, the field of view is divided into four regions and m is 20. The galvanometer module 220 scans row by row downward from the 0^{th} scanning row to the 20^{th} scanning row. After the 20^{th} scanning row is scanned, the galvanometer module 220 returns to a start position of the 0^{th} scanning row during retracing and starts a new scanning cycle. The boundary value of the first region is the row number of the 0^{th} scanning row and the first region corresponds to the slope value K1; the boundary value of the second region is the row number of the 5^{th} scanning row and the second region corresponds to the slope value of K2; the boundary value of the third region is the row number of the 11^{th} scanning row and the third region corresponds to the slope value of K3; and the boundary value of the fourth region is the row number of the 17^{th} scanning row and the fourth region corresponds to the slope value of K4.

When the row number of the current scanning row is the 0^{th} scanning row, the row number is equal to the boundary value of the first region. At this time, the third comparison unit 22 determines that the target slope value of the drive signal is the slope value K1 for the first region. When the row numbers of the current scanning rows are from the 1^{st} scanning row to the 4^{th} scanning row, the row numbers of the scanning rows are not equal to the boundary value of any region, and the slope value of the drive signal remains K1. When the row number of the current scanning row is the 5^{th} scanning row, the row number is equal to the boundary value of the second region, and the third comparison unit 22 determines that the target slope value of the drive signal is the slope value K2 for the second region. At this time, the target slope value of the drive signal is adjusted from K1 to K2, that is, it is determined that the slope value of the drive signal is adjusted to the slope value corresponding to the second region. By analogy, when the row number of the current scanning row is the 17^{th} scanning row, the row number matches the boundary value of the fourth region, and at this time, the third comparison unit 22 determines that the target slope value of the drive signal is the slope value K4 for the fourth region. The target slope value of the drive signal is adjusted to the slope value K4 for the fourth region. After the galvanometer module 220 driven by the drive signal with the slope value K4 completes scanning of the 20^{th} scanning row, the LiDAR completes a scanning cycle and obtains a complete frame of point cloud data. After a retracing process of the drive signal, the galvanometer module 220 returns to a start position of the 0^{th} scanning row.

The third comparison unit 22 outputs, to the drive signal generation unit 23, the slope value of each scanning row determined via comparison. During a scanning process, the drive signal generation unit 23 uses the slope value corresponding to the row number of the current scanning row as the target slope value and outputs the drive signal with the target slope value to the galvanometer module 220 to drive the galvanometer module 220 to deflect in the vertical direction, so that the galvanometer module 220 can implement different vertical resolutions when scanning different regions. In addition, a fast-axis drive signal drives the galvanometer module 220 to deflect in the horizontal direction to accomplish a two-dimensional scanning.

The third comparison unit 22 can be comparator, flip-flop, or the like. The drive signal generation unit 23 can be a signal source, a signal generation circuit, or the like.

To adjust vertical scanning resolutions in different regions in the field of view according to the scenario during the scanning process, the updated characteristic table is written through a programming interface 25, and the data storage unit 21 obtains the characteristic table through the programming interface 25. The characteristic table and the row number of the scanning row can be input via a signal terminal, wireless transmission, and the like.

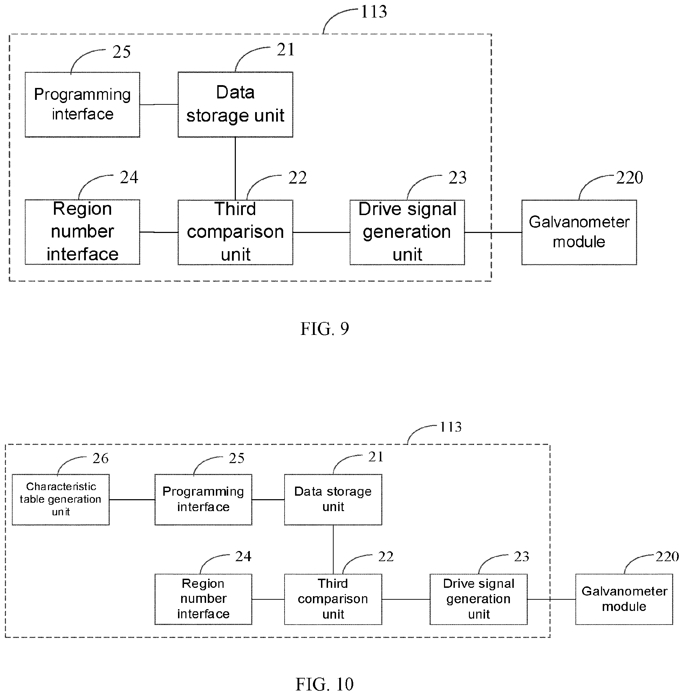

As shown in FIG. 9, the galvanometer control unit 113 further includes:
a programming interface 25, configured to obtain the characteristic table, where the programming interface 25 connects to the data storage unit 21; and
a region number interface 24, configured to obtain the row number of the current scanning row, where the region number interface 24 connects to the third comparison unit 22.

The programming interface 25 is further connected to the characteristic table generation unit 26, and the region number interface 24 connects to the operation management unit 130. The characteristic table generation unit 26 generates a corresponding characteristic table and writes the characteristic table into the data storage unit 21 in the galvanometer control unit 113 through the programming interface 25. During the scanning of ranging, the operation management unit 130 successively inputs row numbers of the scanning rows in sequence into the third comparison unit 22 through the region number interface 24. The third comparison unit 22 compares the boundary value of the region with the row number of the current scanning row, thereby generating the drive signal whose slope value changes according to a preset rule. The characteristic table can be written at the start moment of each scanning cycle or any moment, and the updated characteristic table can be read at the start moment of the next scanning cycle. The specific moment is not limited.

A central region of the field of view of the LiDAR is highly concerned, is usually considered as a ROI (Region of Interest), and is configured with a higher resolution. Correspondingly, regions on the top side and the bottom side of the field of view are usually less concerned, and are configured with a lower resolution than that in the ROI. Optionally, the field of view is divided into N consecutive regions in the direction perpendicular to the row. The region in the middle of the field of view corresponds to the smallest slope value of the drive signal, and regions on two edges of the field of view correspond to the maximum slope value of the drive signal. For example, the field of view is divided into 3 consecutive regions in the direction perpendicular to the row, namely the first region, the second region and the third region. The first region and the third region are regions on the two edges, and the second region is the middle region. The slope values of the drive signals in the regions on the two edges of the field of view are great, and an interval between adjacent scanning rows is the greatest. The slope value of the drive signal in the middle region of the field of view is small, and the interval between adjacent scanning rows is the smallest. The vertical resolution of the second region is greater than the vertical resolutions of the first region and the second region, enhancing the scanning of the middle region.

Further, the field of view is divided into N consecutive regions in the direction perpendicular to the row, namely the first region, the second region ... the N^{th} region. The (N/2)^{th} region is in the middle of the field of view, the first region to the (N/2-1)^{th} region are located at an upper half of the field of view, and the (N/2+1)^{th} region to N^{th} region are located at the lower half of the field of view. Vertical resolutions gradually decrease from the middle region to the edge regions. Correspondingly, the region in the middle of the field of view corresponds to the smallest slope value of the drive signal, and two edge regions of the field of view correspond to the maximum slope value of the drive signal. Slope values of drive signals correspond to other regions between the middle region and the edge region gradually increase from the middle to the two edges.

Therefore, vertical resolutions of different regions in the field of view can be adjusted in real time during the LiDAR operating by editing the characteristic table to meet detection requirements of different scenarios. Optionally, as shown in FIG. 10, the galvanometer control unit 113 further includes:
a characteristic table generation unit 26, configured to divide the field of view into N consecutive regions in the direction perpendicular to the row and generate the characteristic table.

It can be seen from the foregoing description that the reciprocating deflecting motion of the galvanometer module 220 in the vertical direction is a linear movement, and has a deflecting speed related to the slope of the vertical drive signal. It can adjust the deflecting speed of the galvanometer module 220 in the vertical direction in real time by adjusting the slope value of the driving signal, thereby changing the interval between two adjacent scanning rows and adjusting the vertical resolution.

In the characteristic table generated by the characteristic table generation unit 26, the field of view is divided into N different regions along the vertical direction based on the detection requirement, and multiple different regions are represented by boundary values of the scanning rows. With reference to the detection resolution requirement of each region, the slope value of the drive signal is set to form the characteristic table including the number of regions, the boundary values and the slope values.

Further, the field of view is divided into N different regions along the vertical direction according to the detection requirement. The N different regions can be preset. Alternatively, it can be dynamically adjusting the region division method and the vertical resolution requirement of each region based on a detection result.

Optionally, as described above, a central region of the field of view of the LiDAR is highly concerned, and is usually considered as a ROI (Region of Interest), and requires a higher resolution of detecting. Correspondingly, regions on the upper side and the bottom side of the field of view are less concerned, and require a lower resolution of detecting than that of the ROI. According to the detection characteristic of the foregoing LiDAR, the field of view can be divided into 3 consecutive regions in the direction perpendicular to the row. The field of view includes 20 scanning rows. The 0^{th} row is the boundary value of the first region, the 11^{th} row is the boundary value of the second region, and the 16^{th} row is the boundary value of the third region. The first region corresponds to the slope value K1, the second region corresponds to the slope value K2, and the third region corresponds to the slope value K3, where K1 is equal to K3 and K1 is greater than K2. In this way, the vertical resolution of the central region is greater than vertical resolutions of regions on the side regions meeting the detection requirement.

The foregoing example is for illustration only. The field of view can also be divided into N consecutive regions in the direction perpendicular to the row based on demands, and presetting the slope value of the drive signal of each region. However, during the detection process of the LiDAR, measured objects and the scenarios in the field of view change rapidly, and the preset characteristic table cannot meet the detection requirement well. Therefore, it is necessary to dynamically adjust the characteristic table based on the detection result, so that the scanning resolution of the galvanometer module 220 meets scenarios.

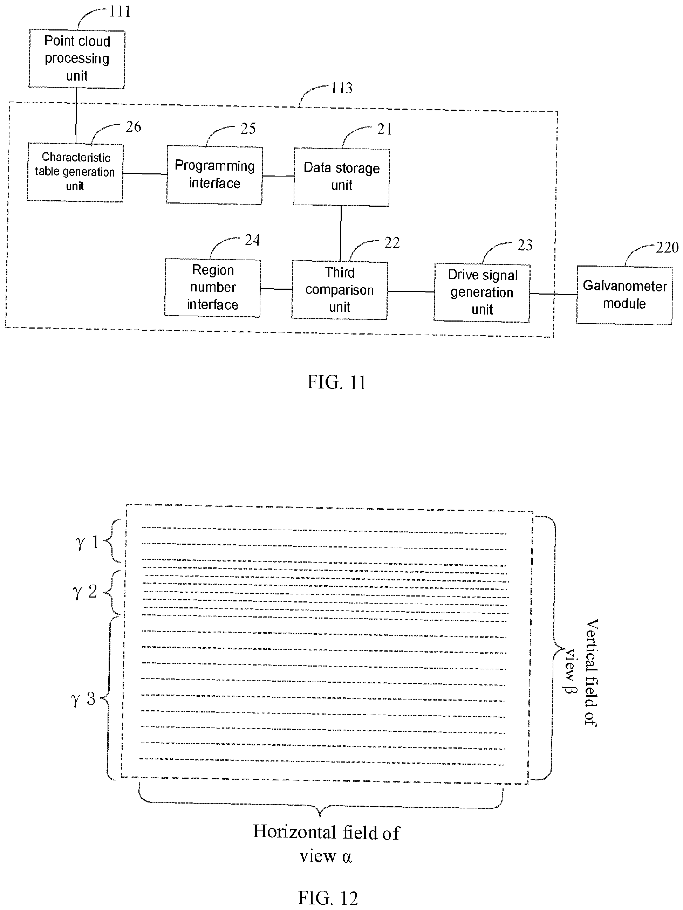

Optionally, as shown in FIG. 11, the characteristic table generation unit 26 is further connected to the point cloud processing unit 111, and the point cloud processing unit 111 is configured to obtain the previous point cloud data and determine at least one interest region where the to-be-detected object is located; and the characteristic table generation unit 26 obtains the boundary values based on at least one interest region and determines the number of the divided regions and the boundary values of each region.

The point cloud data includes data of all detection points in a frame, and data of each detection point includes coordinates and distance. The point cloud processing unit 111 can obtain the detection information about the distance of the to-be-detected object and which region the to-be-detected object is located in through the point cloud data. Based on the detection information obtained from the point cloud data, the field of view is divided into multiple regions. The multiple regions include the interest region and the non-interest region. The interest region is intensively detected, and the non-interest region is regularly detected.

The point cloud processing unit 111 detects the region where the to-be-detected object is not detected regularly, there is no need to enhance detection of the region. The point cloud processing unit 111 detects the region where the to-be-detected object is detected intensively, and the region can be regarded as the interest region. Alternatively, the to-be-detected object is an interest one based on the point cloud data and needs to be further detected intensively. The region where the to-be-detected object is located can be regarded as the interest region. In addition, the region where the to-be-detected object is located may cross the originally divided regions, resulting in a poor scanned point cloud image of the to-be-detected object. Therefore, the characteristic table generation unit 26 edits the item information of the characteristic table based on feedback data output by the point cloud data processing unit, divides the field of view into multiple regions according to the region where the to-be-detected object is located, determines boundary values of the region, and adjusts slope values of the drive signal based on whether the to-be-detected object needs to be detected intensively, which is increasing the slope value for the region that does not need intensive detection and decreasing the slope value for the region that needs intensive detection.

In addition, when multiple to-be-detected objects are found, the characteristic table generation unit 26 divides the field of view into more regions corresponding to different slope values, and the multiple regions are the interest regions where the to-be-detected objects are located.

The interest regions may be selected in various ways, including, but not limited to, "nearest object," "farthest object," "nearest ahead," "farthest ahead," "largest," and "smallest." Methods of selecting the interest regions are configured to adapt to different scenarios, thereby implementing a better effect.

Corresponding to the region division method, optionally, the slope value of the drive signal corresponding to at least one interest region is less than the slope value of the drive signal corresponding to other regions.

In some embodiments, the point cloud processing unit 111 obtains previous frames of point cloud data such as one previous frame of point cloud data or several previous frames of point cloud data, and determines interest regions and non-interest regions based on the point cloud data. Based on such result, the characteristic table generation unit 26 determines the number of divided regions and boundary values of the field of view in the vertical direction, and determines slope values of the drive signal corresponding to each region based on the vertical resolution required for each region. Such information forms the updated characteristic table, and the characteristic table is written into the data storage unit 21 through the programming interface 25 to adjust the drive signal in the next scanning cycle. For example, as shown in FIG. 12, the redivided regions include the first region γ1, the second region γ2, and the third region γ3. The interest region is the second region γ2. The second region corresponds to the smaller slope value and the denser point cloud.

The point cloud processing unit 111 is a data collection module, a processor and the like, and the characteristic table generation unit 26 is a data processor such as an FPGA, a CPU, an MCU and the like.

The data storage unit 21 is the memory such as a flash memory or a RAM memory.

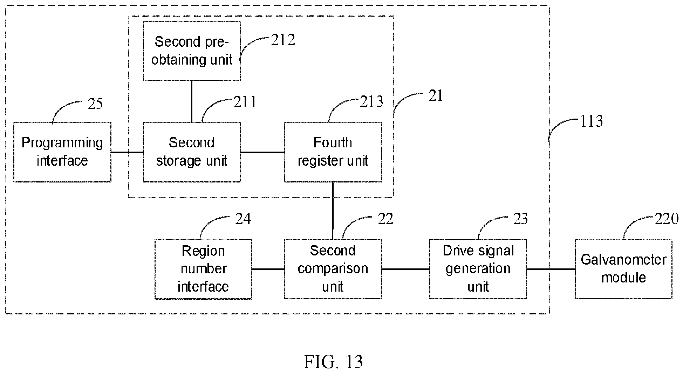

Optionally, as shown in FIG. 13, the data storage unit 21 includes a second storage unit 211, a second pre-obtaining unit 212 and a fourth register unit 213;
the second storage unit 211 is configured to store the characteristic table when in a programming state;
the second pre-obtaining unit 212 is configured to read the characteristic table when in the running state and send the characteristic table to the fourth register unit 213 to update the item information loaded by the fourth register unit 213; and
the fourth register unit 213 is configured to register and output the item information of the characteristic table to the third comparison unit 22.

In some embodiments, in a programming state, the second storage unit 211 receives the characteristic table through the programming interface 25, and the characteristic table generation unit 26 adjusts the number of the regions, boundary values of the regions and corresponding slope values in the vertical field of view. After programming, switching the working state of the second storage unit 211 through the state switching interface. When the working state changes, the second pre-obtaining unit 212 starts, reads the item information of the characteristic table and updates the item information to the fourth register unit 213. The fourth register unit 213 stores the item information of the characteristic table, and outputs the updated item information during the scanning process to be applied to region comparison of the third comparison unit 22. Generating the drive signal with the corresponding slope values and sending the drive signal to the galvanometer module 220.

The second storage unit 211 is a corresponding type of memory such as a flash memory or a RAM memory, the second pre-obtaining unit 212 is a corresponding reader/writer module, and the fourth register unit 213 is a corresponding type of register. The specific type is not limited.

Still referring to FIG. 2, the function test unit 140 includes:
a test unit 142, connected to each unit of the master control chip 100 of the LiDAR and configured to be controlled to perform function state detection and feed back detection information; and
a security management unit 141, connected to the test unit 142 and configured to drive the test unit 142 to test, receive the detection information and report corresponding state information.

In this embodiment, the test unit 142 is responsible for testing the function states of each unit and module of the chip, and feeding back the corresponding detection information to the security management unit 141. The security management unit 141 collects detection states of each unit and module, and is also responsible for self-test of the chip when the test unit 142 is powered on, and reporting when finding the faulty state.

The security management unit 141 is a corresponding structure such as a processor or a controller. A specific structure is not limited.

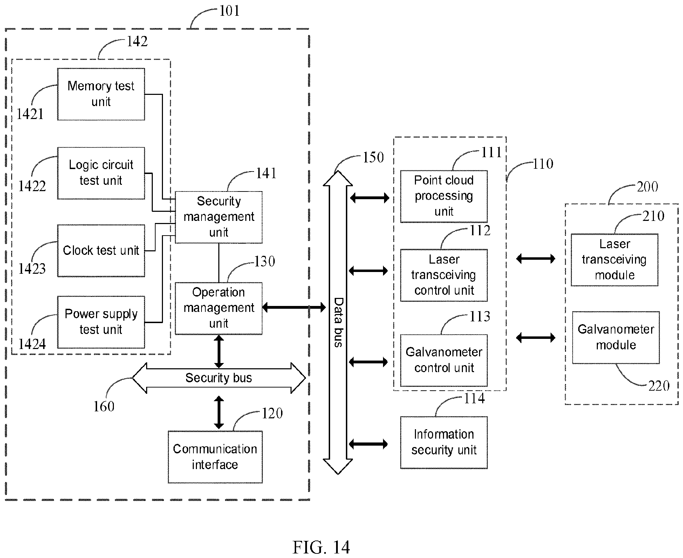

The test unit 142 can be correspondingly configured according to the test requirement. As shown in FIG. 14, the test unit 142 includes:
a memory test unit 1421, configured to perform function detection on each storage unit of the master control chip 100 of the LiDAR and report corresponding storage detection information to the security management unit 141; and
a logic circuit test unit 1422, configured to perform function detection on each logic unit of the master control chip 100 of the LiDAR, and report corresponding logic detection information to the security management unit 141.

In some embodiments, the memory test unit 1421 is an NMIST (memory built-in self-test) module, and is responsible for function check of all the memories of the master control chip 100 of the LiDAR when being powered on, and reporting a fault to the security management unit 141 when finding the fault of the memory.

The logic circuit test unit 1422 is an LBIST (logic built-in self-test) module, and is responsible for function check of all the logic circuits of the master control chip 100 of the LiDAR when being powered on, and reporting a fault to the security management unit 141 when finding the fault of the logic circuit.

To further improve a test function of the chip, as shown in FIG. 14, the test unit 142 further includes:
a clock test unit 1423, configured to detect clock information of the master control chip 100 of the LiDAR and report corresponding clock detection information to the security management unit 141; and
a power supply test unit 1424, configured to detect a power supply state of the master control chip 100 of the LiDAR, and report corresponding power supply detection information to the security management unit 141.

In some embodiments, the clock test unit 1423 is responsible for examining a clock of the master control chip 100 of the LiDAR, and reporting a frequency fault to the security management unit 141 if there is the frequency fault. The power supply test unit 1424 is responsible for checking all the power supply states of the chip, and reporting a fault of an excessively high or excessively low supply voltage to the security management unit 141 if the fault of the excessively high or excessively low supply voltage occurs.

To improve security of each management module and avoid impact from a working state of the execution control unit 110, as shown in FIG. 14, optionally, the communication interface 120, the operation management unit 130 and the function test unit 140 are arranged in a security domain 101; and
the execution control unit 110 is arranged in a non-security domain, and the security domain 101 and the non-security domain are respectively connected to different power supply modules and clock modules.

Each module in the security domain uses an independent power supply, an independent clock signal and an independent signal bus. The security domain 101 and the non-security domain work independently without affecting each other, which improves stability of the master control chip 100 of the LiDAR.

To further improve the chip security and functional diversity of the master control chip 100 of the LiDAR, the master control chip 100 of the LiDAR further includes:
an information security unit 114 connected to the operation management unit 130, where the information security unit 114 is configured to calculate an algorithm program related to information security of the master control chip 100 of the LiDAR, to code and decode data output by the laser transceiving control unit 112, the galvanometer control unit 113 and the point cloud processing unit 111, thereby improving data security of the master control chip 100 of the LiDAR.

The information security unit 114 is a corresponding structure such as a coding and decoding hardware module, a controller, a processor and the like. The specific structure is not limited.

Further, to simplify the circuit structure and the overall structure of the master control chip 100 of the LiDAR, the master control chip 100 of the LiDAR further includes a data bus 150. The operation management unit 130 connects to the execution control unit 110 and the information security unit 114 through the data bus 150 respectively.

The data bus 150 is mounted with the main execution control unit 110 and information security unit 114. The execution control unit 110 includes the point cloud processing unit 111, the laser transceiving control unit 112 and the galvanometer control unit 113, and the execution control unit 110 and the information security unit 114 perform bus communication with the operation management unit 130 through the data bus 150, thereby simplifying a wire structure therebetween and further simplifying the overall structure of the master control chip 100 of the LiDAR.

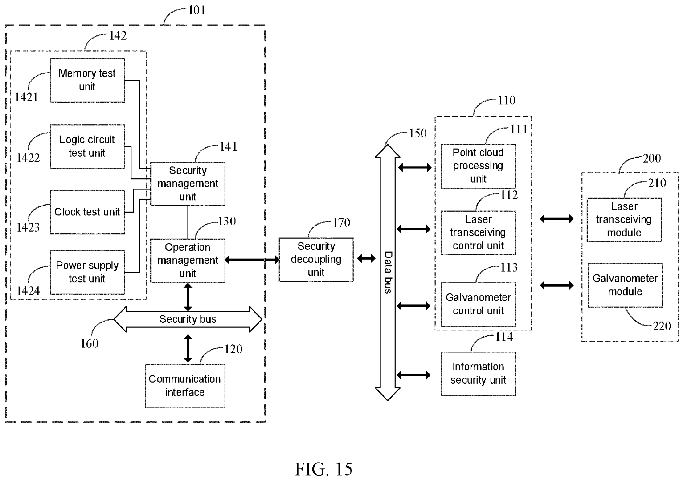

In addition, to achieve signal isolation between the operation management unit 130 and the execution control unit 110 and/or signal isolation between the operation management unit 130 and the information security unit 114 and avoid mutual impact, as shown in FIG. 15, the master control chip 100 of the LiDAR further includes:
a security decoupling unit 170, where the security decoupling unit 170 is connected between the operation management unit 110 and the data bus 150, the operation management unit 130 connects to the execution control unit 110 and the information security unit 114 through the security decoupling unit 170, and the security decoupling unit 170 is configured to detect and isolate interactive information between the operation management unit 130 and the execution control unit 110 and the information security unit 114.

The security decoupling unit 170 is responsible for isolating the operation management unit 130 from the execution control unit 110 and the information security unit 114. The security decoupling unit 170 checks correctness of interactive commands and data between the operation management unit 130 and the execution control unit 110 and the information security unit 114. When the commands or data crashes or is faulty, the faulty state is not transmitted to the operation management unit 130.

Further, multiple communication interfaces 120 are provided. To simplify the circuit structure and the overall structure of the master control chip 100 of the LiDAR, optionally, the master control chip 100 of the LiDAR further includes a safety bus 160; and
the communication interface 120 connects to the operation management unit 130 through the safety bus 160, and the multiple communication interfaces 120 are communicatively connected to the operation management unit 130 through the safety bus 160 to implement signal assembly.

The present invention also proposes a LiDAR device, where the LiDAR device includes a ranging module 200 and a master control chip 100 of a LiDAR. For a specific structure of the master control chip 100 of the LiDAR, refer to the foregoing embodiments. Because the LiDAR device uses all the technical solutions of all the foregoing embodiments, the LiDAR device at least has all beneficial effects brought by the technical solutions of the foregoing embodiments. Details are not enumerated herein again. The master control chip 100 of the LiDAR connects to the ranging module 200 correspondingly.

In this embodiment, the master control parts of the LiDAR device are integrated into the master control chip 100 of the LiDAR responsible for driving the ranging module 200 and also completing other main functions of the LiDAR device, including security management, operation management, information management, function testing, and the like, which simplifies an overall structure and reduces the design costs of the LiDAR device.

The ranging module 200 includes a laser transceiving module 210 and a galvanometer module 220. The laser transceiving module 210 emits a laser pulse and then the laser pulse is reflected to a corresponding field of view by the galvanometer module 220. In addition, a laser pulse returning after being reflected by the target object in the corresponding field of view passes through the galvanometer module 220, and is reflected by the galvanometer module 220 to the laser transceiving module 210. The galvanometer module 220 is controlled to face toward the field of view and deflect along the vertical field of view and the horizontal field of view correspondingly to form a corresponding two-dimensional scanning field of view or a three-dimensional scanning field of view.

The foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A master control chip of a LiDAR, comprising an execution control unit, a communication interface, an operation management unit and a function test unit that are integrated, wherein
the execution control unit is configured to connect a ranging module of the LiDAR and control the ranging module to operate ranging;
the operation management unit connects to the execution control unit and the communication interface respectively, and is configured to communicate with a peripheral device through the communication interface and to drive the execution control unit to operate; and
the function test unit connects to each unit of the master control chip of the LiDAR, and is configured to test function states of the units of the master control chip and to report corresponding state information.

2. The master control chip of the LiDAR according to claim 1, wherein the ranging module comprises a laser transceiving module and a galvanometer module; and
wherein the execution control unit comprises:
a point cloud processing unit, configured to process point cloud data from the laser transceiving module;
a laser transceiving control unit, configured to control the laser transceiving module to emit and receive a laser beam; and
a galvanometer control unit, configured to control movement of the galvanometer module.

3. The master control chip of the LiDAR according to claim 1, wherein the function test unit comprises:
a test unit, connected to the each unit of the master control chip of the LiDAR and configured to test the function states of the each unit of the master control chip when driven and feedback test information; and
a security management unit, connected to the test unit and configured to drive the test unit to test, receive the test information and report corresponding state information.

4. The master control chip of the LiDAR according to claim 3, wherein the test unit comprises:
a memory test unit, configured to test a function of each storage unit of the master control chip of the LiDAR and to report corresponding storage test information to the security management unit; and
a logic circuit test unit, configured to test a function of each logic unit of the master control chip of the LiDAR and to report corresponding logic test information to the security management unit.

5. The master control chip of the LiDAR according to claim 4, wherein the test unit further comprises:
a clock test unit, configured to test clock information of the master control chip of the LiDAR and to report corresponding clock test information to the security management unit; and
a power supply test unit, configured to test power supply state of the master control chip of the LiDAR and to report corresponding power supply test information to the security management unit.

6. The master control chip of the LiDAR according to claim 1, wherein the master control chip of the LiDAR further comprises:
an information security unit, connected to the operation management unit and configured to execute an algorithm program related to information security of the master control chip of the LiDAR.

7. The master control chip of the LiDAR according to claim 6, wherein the master control chip of the LiDAR further comprises a data bus; and
wherein the operation management unit connects to the execution control unit and the information security unit separately through the data bus.

8. The master control chip of the LiDAR according to claim 7, wherein the master control chip of the LiDAR further comprises:
a security decoupling unit, connected to the operation management unit and the data bus and between the operation management unit and the data bus, and is configured to test and isolate interaction information of the operation management unit and the execution control unit and interaction information of the operation management unit and the information security unit.

9. The master control chip of the LiDAR according to claim 1, wherein the communication interface, the operation management unit, and the function test unit are arranged in a security domain; and
wherein the execution control unit is arranged in a non-security domain, and the security domain and the non-security domain are respectively connected to different power supply modules and different clock modules.

10. A LiDAR device, comprising a ranging module and a master control chip of a LiDAR according to any one of claims 1 to 9, wherein the master control chip of the LiDAR is correspondingly connected to the ranging module.
